# EUROPÄISCHE PATENTANMELDUNG

(11) **EP 3 329 756 A1**
(43) Veröffentlichungstag der Anmeldung: **06.06.2018**
(21) Anmeldenummer: 17203846.5
(22) Anmeldetag: 27.11.2017
(51) Int. Cl.: A01B 29/04, A01B 15/16, A01B 23/06

(54) **SCHNEIDPACKERWALZE**

(30) Priorität: 30.11.2016 DE 102016014279
(71) Anmelder: Niebler, Martin, 94363 Oberschneiding (DE)
(72) Erfinder: Niebler, Martin, 94363 Oberschneiding (DE)
(74) Vertreter: Gustorf, Gerhard

(57) **Zusammenfassung**

Die Schneidpackerwalze dient zur Saatbeetbereitung mit exakter Tiefen- und Nachlaufführung von Bodenbearbeitungs- und Sägeräten, wobei an einem zentralen, großvolumigen Achsrohr (16) eine Mehrzahl parallel nebeneinander angeordneter Packerschneidscheiben (10) mit leichter radialer Außenprofilierung befestigt ist. Gemäß der Erfindung ist vorgesehen, dass am Außenumfang der Packerschneidscheiben (10) über die gesamte Packerwalzenbreite verteilt axial vorstehende Mitnehmeranschläge (12, 14) angebracht sind, die bei allen Bodenverhältnissen und praktischen Gegebenheiten ein sicheres und blockadefreies Abrollen und Einsinken der Packerwalze (30) bis zum Achsrohr (16) gewährleisten. Dadurch ist gewährleistet, dass die Packerwalze (30) störungsfrei läuft und zur exakten Tiefenführung immer bis zum Achsrohr (16) einsinkt und die Mitnehmeranschläge (12, 14) den angewalzten Boden beim Abrollen wieder leicht anheben und lockern, damit auch heftiger Starkregen vom rückverfestigten Boden aufgenommen werden kann. Das Achsrohr (16) hat einen Außendurchmesser von 270 mm bis 460 mm, und die Packerschneidscheiben (10) haben eine über das Achsrohr (16) hinausstehende Schneid- oder Steghöhe zwischen 90 mm und 160 mm.

## Beschreibung

Die Erfindung betrifft eine Packerwalze zur Bodenbearbeitung und Rückverfestigung mit exakter Geräteführung beim Säen, bestehend aus einer Mehrzahl parallel nebeneinander auf einem großvolumigen Achsrohr angebrachter Schneidpackerscheiben, die mit Lagerzapfen in einem Abstreiferrahmen gelagert sind.

Die Erfindung bringt dem Ackerbau eine völlig neue Art der Bodenrückverfestigung und Geräteführung. Die Schneidpackerwalze dient zur Bodenbearbeitung und Rückverfestigung des voraus gelockerten Bodens und zur Schollenzerkleinerung und vor allem zur exakten Tiefen- und Seitenführung von Bodenbearbeitungs- und Sämaschinen für exaktes Anschlussfahren, im Besonderen, um ein Abdriften am Hang zu verhindern, wodurch auch viel Zugkraft und Energie eingespart wird. Ein exaktes Anschlussfahren beim Säen ist für die nachfolgende Pflanzenschutz- und Düngetechnik mit genauen Arbeitsbreiten sehr wichtig, um teure und umweltschädigende Überlappungen beim Düngen und Spritzen zu vermeiden. Zudem wird mit der Erfindung das zeit- und kostenraubende Ummodellieren und Wechseln von Packerwalzen während der witterungsbedingt knappen Zeitfenster zur Feldbestellung vermieden, was durch die wechselnden Einsatzbedingungen bisher erforderlich war. Die erfindungsgemäßen Allround-Packerwalze wird die Bodenbearbeitung und Aussaat effizienter, unkomplizierter, stressfreier und vor allem weltweit erheblich wirtschaftlicher durchführen lassen.

Es gibt eine Vielzahl von Packerwalzen, die nur bei bestimmten Bodenverhältnissen und Einsatzbedingungen funktionieren. Sie müssen im praktischen Einsatz vom Landwirt oder Lohnunternehmer bei wechselnden Bodenverhältnissen, bei Trockenheit oder Nässe, nach gepflügten oder bei Mulch zeitaufwendig gewechselt werden oder mit noch viel mehr Zeitaufwand ummodelliert werden oder erfordern einen Wechsel der Arbeitswerkzeuge. Einige der bekannten Packerwalzen graben durch ihre Profilgestaltung Ernterückstände aus und ziehen diese in die Speichen, in die Ausräumer oder Abstreifer des Bodenbearbeitungswerkzeugs, darunter auch Steine und feuchte Erde, so dass sie nach kurzer Einsatzzeit zum Stehen kommen.
Andere Ausführungen haben Packerringe mit schmalen Lauf- und Trägerringen, die die Maschine auf schwerem Boden gut tragen, jedoch auf leichtem Boden versinken und die exakte Tiefenführung der Lockerungswerkzeuge und Säschare zunichte machen.
Das Saatgut wird dadurch regelrecht vergraben, so dass es an leichten Stellen nur noch lückenhaft oder gar nicht mehr aufläuft, während die Bodenbearbeitungs- und Sämaschine durch ihr Versinken den Zugschlepper aufgrund von Schwergängigkeit viel Kraft abverlangt oder gar zum Stehen bringt.
Wieder andere Packerausführungen haben deshalb breite Laufringe, die bei mittelschweren Bodenverhältnissen gute Arbeit leisten, bei schweren, klebrigen und nassen Bodenverhältnissen die Lockerungswerkzeuge und Säschare ausheben, wodurch die verdichteten Böden keine Lockerung mehr bekommen, das Saatgut und Dünger obenauf liegen und bei nachfolgendem Regen Humus, Wasser, Saatgut und Nährstoffe weggeschwemmt werden.

Unter Berücksichtigung der ackerbaulichen, umweltschädlichen und praktischen Probleme der Vielzahl der hinreichend bekannten Packerwalzen auch hinsichtlich der Bodenabdichtung und Wasserrinnenbildung mit einhergehender Bodenverschlämmung wird es höchste Zeit, Packerwalzen zu entwickeln, die nicht nur störungsfrei den Anforderungen im Ackerbau, der Bodenbearbeitungs- und Sägeräteführung gerecht werden, sondern auch dem Umweltschutz dienen und die verheerenden Überschwemmungen von Gewässern, Kanalisationen und Siedlungen mit Erde, Dünger und Pflanzenschutzmitteln in Zukunft erheblich mindern, denn die heftigen Starkregenereignisse sind nicht nur unwetterbedingt. Sie werden vor allem wegen unsachgemäßer Bodenbearbeitung, Bodenabdichtungen mit Rinnen- und Keilringwalzen und sonstige Bodenverdichtungen verstärkt hervorgerufen. Die Rinnenpackerwalzen, Keilringwalzen und Glattwalzen tragen auf jeden Fall zu einem Großteil zu den verheerenden Überschwemmungen bei. Früher wurde geeggt, da konnte der Regen in den Boden einsickern. Heute wird schon mit Reifenpackern oder Keilringwalzen vorsätzlich der Boden nahezu zugewalzt und damit Regen und Nährstoffe weggespült, um sie wieder teuer nachkaufen zu müssen. Der Landwirt wird als Schuldiger hingestellt. Leider ist er nur ein Opfer von Geschäftemachern, die seit Jahren zum Kauf dieser Bodenabdichttechnik raten, um im Anschluss den weggespülten Dünger und Pflanzenschutz wieder lukrativ zu ersetzen, während durch diese landtechnischen Fehlentwicklungen aus Vorsatz oder Unfähigkeit der Umwelt, der Gesellschaft, den Gewässern, Siedlungen und Kanalisationen erheblicher Schaden zugefügt wird.

Die Schneidpackerwalze gemäß der Erfindung soll diese Probleme und Katastrophen weitgehend abstellen oder doch erheblich mindern.

Die Erfindung schafft die Grundlage für ein perfektes Saatbeet. Durch die Ausführung als Schneidpackerwalze mit leichter radialer Außenprofilierung, die gewährleitet, dass die Walze sicher rollt und trotzdem keine Ernterückstände und Steine aufnimmt und auch keine feuchte Erde ausgräbt, sichert sie bei allen Bodenverhältnissen das Einschneiden in den Boden bis zur Tragachse als Grundlage für eine gute Bodenrückverfestigung in Verbindung mit einer exakten Tiefen- und Längsführung der Bodenbearbeitungs- und Sämaschinen. Egal welche Bodenart, welcher Feuchtezustand, ob mit oder ohne Mulchauflage schneidet diese Schneidpackwalze mit einem Achsrohrdurchmesser von etwa 270 mm bis 460 mm sicher in den Boden ein. Die tief einschneidenden Schneidscheiben von 90 mm bis 160 mm bringen die nötige Reibung im Boden und damit beim Abrollen das nötige Drehmoment, das für diese Schneidpackerwalze erforderlich ist, um die Bremswirkung zu überwinden, die von den Abstreifern auf die Stahlrohrachse übertragen wird, um ein sicheres, störungsfreies Laufen bei allen Bodenverhältnissen, allen Feuchtigkeitszuständen und sonst üblichen praktischen Gegebenheiten zu gewährleisten. Die in der Praxis bekannten Abstreifer-, Speichen- und Zahnscheibenprobleme durch Einziehen von Ernterückständen und Steinen sind bei der Neuentwicklung nicht mehr möglich.
Die leichte radiale Außenprofilierung begünstigt das sichere Abrollen, ohne dass nasse Erde, Steine oder Ernterückstände aufgenommen werden. Dies ist die Grundlage für störungsfreies Arbeiten ohne die bisher bekannten Probleme des Zusetzens der Packerwalze.
Mindestens genauso wichtig und herausragend ist, dass das lästige Packerwalzentauschen und Ummodellieren in Zukunft kein Thema mehr ist. Auch die ewige Diskussion, welche Walze für welchen Boden gehört der Vergangenheit an, ebenso das Vorhalten unzähliger Packerwalzenmodelle und Profile.
Das durchdachtes System gemäß der Erfindung reicht unter allen Bedingungen weltweit vom Frühjahr bis zum Wintereinbruch aus, um schonend und perfekt die Felder zu bestellen ohne die bisher vorhandenen Wasser- und Nährstoffrinnen, die das wichtigste Ertragspotential, nämlich Humus, Wasser und Dünger, bisher umweltschädlich in Flüsse, Bäche und Siedlungen geleitet haben. Der Landwirt kann damit künftig umweltschonend und wirtschaftlich Spitzenerträge erzielen.

Dennoch kann es in der Praxis unter Berücksichtigung der weltweit sehr unterschiedlichen Gegebenheiten vorkommen, dass das erforderliche Drehmoment der leicht profilierten Packerscheiben nicht ausreicht, um die Bremswirkung der Abstreifer bei losen Böden und hoher Arbeitsgeschwindigkeit immer sicher zu überwinden, so dass die Packerwalze zum Stottern oder zum Stehen kommen kann. Deshalb ist ein wichtiger Bestandteil der Erfindung, dass zur leichten radialen Außenprofilierung der Packerscheiben das Drehmoment der Packerwalze mit am Außenrand axial vorstehenden, angeschraubten oder angeschweißten Mitnehmeranschlägen erhöht werden kann. Selbstverständlich werden nur so viele Mitnehmeranschläge ergänzt, dass ein sicheres, blockadefreies Laufen unter allen praktischen Gegebenheiten gewährleistet ist. Nachrüstungen und Ergänzungen sind darüber hinaus nur nötig, wenn die Mitnehmeranschläge verschlissen sind oder die Maschine in ein völlig anderes Einsatzgebiet verkauft wird, wo die praktischen Bedingungen grundlegend anders sind. Genauso gut können dann zu viele angebrachte Mitnehmeranschläge wieder abmontiert werden, falls durch zu viele Mitnehmeranschläge das sichere Eindringen der Schneidpackerwalze bis zum großvolumigen Achsrohr als Grundlage für exakte Tiefenführung der Lockerungswerkzeuge und Säschare nicht mehr sicher gewährleistet wäre. Im Grenzfall ist es auch möglich, die Packerwalze 30 ohne Mitnehmeranschläge einzusetzen.

Die Erfindung bringt in Zukunft durch ein genaues Anschlussfahren der Sämaschine auch am Hang die Grundvoraussetzung für exaktes Düngen und Spritzen ohne Fehlstellen und Überlappen und einem exakteren und umweltschonenderen Ackerbau insgesamt.

Weitere Merkmale und Vorteile der Erfindung ergeben sich aus den Patentansprüchen und aus der Beschreibung eines Ausführungsbeispiels, das in den Zeichnungen dargestellt ist. Es zeigen:

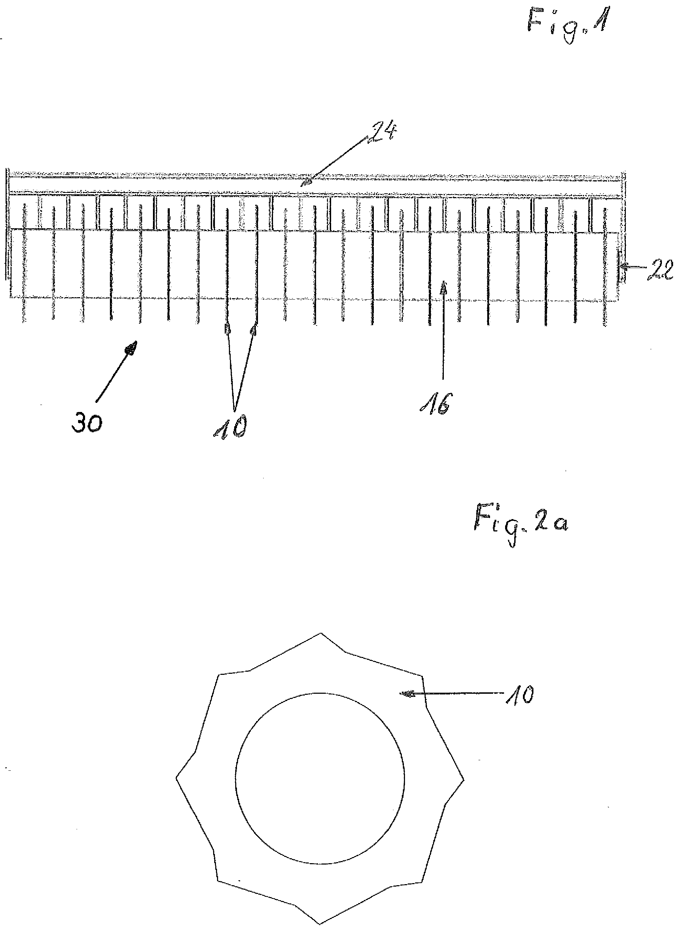

Figur 1 die Packerwalze 30, die aus einer Vielzahl parallel nebeneinander angebrachter Schneidscheiben 10 besteht, die als Stahlscheiben ausgeführt und auf einer großvolumigen Stahlrohrachse 16 befestigt, z.B. aufgeschweißt sind. Außerdem geht aus Figur 1 hervor, dass die Packerwalze 30 in einem Abstreiferrahmen 24 drehbar gelagert ist;
Figur 2a zeigt eine Packerschneidscheibe 10 gemäß Erfindung mit leichter Radialprofilierung ohne Mitnehmeranschläge;

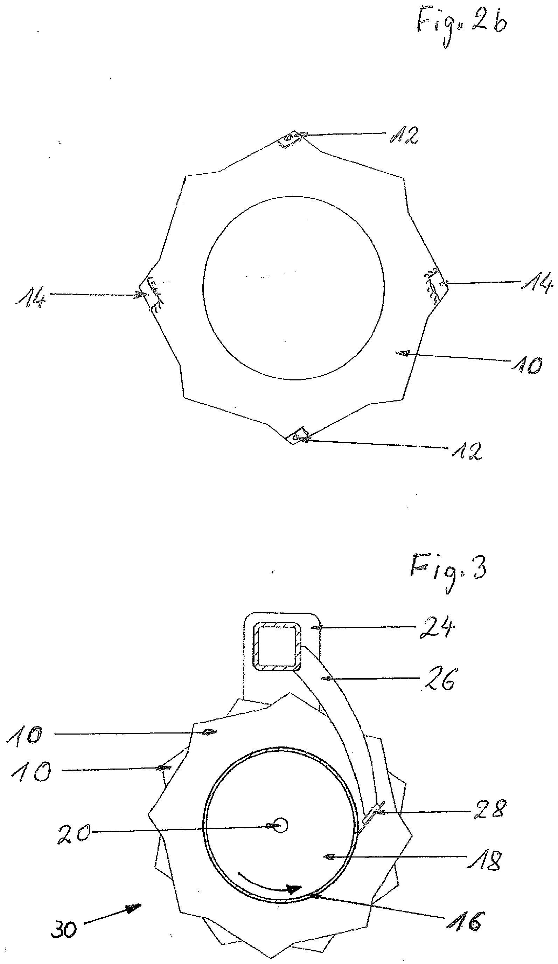

Figur 2b zeigt eine Packerschneidscheibe 10 gemäß Erfindung mit zwei aufgeschraubten Mitnehmeranschlägen 12 und zwei angeschweißten Mitnehmeranschlägen 14; Bei einer Variante ist denkbar, die Mitnehmeranschläge 12 durch die Köpfe und Muttern kräftiger Schrauben ohne dazwischen eingeklemmte Anschlagbleche zu bilden.
Figur 3 zeigt die Stirnansicht der Packerwalze 30 gemäß Erfindung und den Abstreiferrahmen 24 im Schnitt. Außerdem geht aus Figur 3 hervor, dass die leicht radialprofilierten, etwa sternförmigen Packerschneidscheiben 10 in Umfangsrichtung paarweise versetzt auf ein großvolumiges Packerachsrohr 16 aufgeschweißt sind und dieses großvolumige Packerachsrohr 16 über Abstreiferhalter 26 und Abstreifer 28 von anhalftender Erde freigehalten wird. Zudem ist aus den Figuren 1 und 3 ersichtlich, dass das Packerachsrohr 16 über eine Flanschscheibe 18 und einen Lagerzapfen 20 im Abstreiferrahmen 24 gelagert ist. Die Drehrichtung der Packerwalze 30 ist durch einen Pfeil angedeutet.

### Bezugszeichenliste

- 10: = Packerschneidscheibe
- 12: = aufgeschraubter Mitnehmeranschlag
- 14: = aufgeschweißter Mitnehmeranschlag
- 16: = Packerachsrohr
- 18: = Flanschscheibe
- 20: = Lagerzapfen
- 22: = Lager
- 24: = Abstreiferrahmen
- 26: = Abstreiferhalter
- 28: = Abstreifer
- 30: = Packerwalze

## Patentansprüche

1. Schneidpackerwalze für die Saatbeetbereitung mit exakter Tiefen- und Nachlaufführung von Bodenbearbeitungs- und Sägeräten, wobei an einem zentralen, großvolumigen Achsrohr (16) eine Mehrzahl parallel nebeneinander angeordneter Packerschneidscheiben (10) mit leichter radialer Außenprofilierung befestigt ist, **dadurch gekennzeichnet, dass** am Außenumfang der Packerschneidscheiben über die gesamte Packerwalzenbreite verteilt axial vorstehende Mitnehmeranschläge (12, 14) angebracht sind, die bei allen Bodenverhältnissen und praktischen Gegebenheiten ein sicheres und blockadefreies Abrollen und Einsinken der Packerwalze (30) bis zum Achsrohr (16) gewährleisten, so dass die Packerwalze (30) störungsfrei läuft und zur exakten Tiefenführung immer bis zum Achsrohr (16) einsinkt und die Mitnehmeranschläge (12, 14) den angewalzten Boden beim Abrollen wieder leicht anheben und lockern, damit auch heftiger Starkregen vom rückverfestigten Boden aufgenommen werden kann, wobei das Achsrohr (16) einen Außendurchmesser von 270 mm bis 460 mm hat und die Packerschneidscheiben (10) eine über das Achsrohr (16) hinausstehende Schneid- oder Steghöhe zwischen 90 mm bis 160 mm haben.

2. Schneidpackerwalze nach Anspruch 1, **dadurch gekennzeichnet, dass** die Mitnehmeranschläge (12, 14) am Außenumfang der Packerschneidscheibe (10) angeschweißt, eingepresst, angeklebt oder angeschraubt sind.

3. Schneidpackerwalze nach Anspruch 1 oder 2, **dadurch gekennzeichnet, dass** jede Packerschneidscheibe (10) am Außenumfang abwechselnd mit geschweißten, eingepressten, angeklebten oder und angeschraubten Mitnehmeranschlägen (12, 14) ausgeführt ist.

4. Schneidpackerwalze nach Anspruch 1, **dadurch gekennzeichnet, dass** alle Packerschneidscheiben (10) am Außenumfang mit angeschraubten Mitnehmeranschlägen (12) ausgeführt sind.

5. Schneidpackerwalze nach Anspruch 1, **dadurch gekennzeichnet, dass** nur wenige Packerschneidscheiben (10) am Außenumfang mit angeschweißten Mitnehmeranschlägen (14) ausgeführt sind.

6. Schneidpackerwalze nach Anspruch 1, **dadurch gekennzeichnet, dass** nur wenige Packerschneidscheiben (10) am Außenumfang mit angeschraubten Mitnehmeranschlägen (12) ausgeführt sind.

7. Schneidpackerwalze nach Anspruch 1, **dadurch gekennzeichnet, dass** wenige Packerschneidscheiben (10) am Außenumfang über die gesamte Packerwalze (30) verteilt mit eingepressten Mitnehmeranschlägen (12) ausgeführt sind.

8. Schneidpackerwalze nach Anspruch 1, **dadurch gekennzeichnet, dass** alle Packerschneidscheiben (10) am Außenumfang mit eingepressten Mitnehmeranschlägen (12) ausgeführt sind.

9. Schneidpackerwalze nach Anspruch 1, **dadurch gekennzeichnet, dass** über die gesamten Packerschneidscheiben (10) verteilt am Außenumfang nur wenige Mitnehmeranschläge (14) aufgeklebt sind.

10. Schneidpackerwalze nach Anspruch 1, **dadurch gekennzeichnet, dass** über die gesamten Packerschneidscheiben (10) verteilt am Außenumfang nur wenige Mitnehmeranschläge (14) aufgeschweißt sind.

11. Schneidpackerwalze nach Anspruch 1, **dadurch gekennzeichnet**, das am Außenumfang die Packerschneidscheiben (10) mit Mitnehmeranschlägen (12, 14) ausgeführt sind.

12. Schneidpackerwalze nach einem der vorhergehenden Ansprüche, **dadurch gekennzeichnet, dass** die Mitnehmeranschläge (12) bei Bedarf oder Abnützung abnehmbar und/oder ergänzbar sind.

13. Schneidpackerwalze nach Anspruch 12, **dadurch gekennzeichnet, dass** die Packerschneidscheiben (10) ohne Mitnehmeranschläge einsetzbar sind.
